# EUROPEAN PATENT APPLICATION

(11) **EP 2 949 990 A1**
(43) Date of publication of application: **02.12.2015**
(21) Application number: 15169956.8
(22) Date of filing: 29.05.2015
(51) Int. Cl.: F21V 8/00

(54) **THREE-DIMENSIONAL DISPLAY APPARATUS**

(30) Priority: 30.05.2014 KR 20140066240; 17.10.2014 KR 20140140507
(71) Applicant: Samsung Electronics Co., Ltd, Gyeonggi-do 443-742 (KR)
(72) Inventor: MINAMI, Masaru, Hwaseong-si (KR); LEE, Won Yong, Suwon-si (KR); JEON, Keun Bae, Suwon-si (KR)
(74) Representative: Appleyard Lees

(57) **Abstract**

Disclosed herein is a three-dimensional display apparatus having a light guide module which guides light emitted from a backlight to a display panel. The three-dimensional display apparatus includes a first light guide, a second light guide, and an emission pattern which emits light toward the display panel, and viewing distances between both eyes of a user and the display panel are determined by a thickness of the second light guide regardless of a thickness of the first light guide, thus the desired thickness of the light guide module is able to be freely designed by a designer.

## Description

### CROSS-REFERENCE TO RELATED APPLICATION

This application claims the benefit of Korean Patent Application No. 10-2014-0066240 and 10-2014-0140507, filed on May 30, 2014 and October 17, 2014, respectively, in the Korean Intellectual Property Office, the disclosure of which is incorporated herein by reference.

### BACKGROUND

### 1. Field

Embodiments of the present invention relate to a three-dimensional display apparatus capable of displaying a stereoscopic image.

### 2.a Description of the Related Art

In general, as display apparatuses are apparatuses capable of displaying images, monitors or televisions are included therein.

Recently, three-dimensional display apparatuses among such the display apparatuses have been proposed to display three-dimensional images in addition to two-dimensional images.

The three-dimensional display apparatus includes a display panel having a liquid crystal panel, and a backlight disposed in the rear of the display panel and configured to generate light to be supplied to the display panel.

The backlight includes a pair of three-dimensional light sources disposed on both rear sides of the display panel, a light guide disposed between the two three-dimensional light sources and configured to guide light emitted from the three-dimensional light sources to the display panel located in the front thereof, and a two-dimensional light source disposed in the rear of the light guide. Further, emission patterns are formed on the light guide to scatter light, and the light passing through only locations at which light emission patterns are formed is limitedly emitted to the display panel.

In the three-dimensional display apparatus as described above, viewing distances between both eyes of a user and the display panel are dependent on the thickness of the light guide, and the thickness of the light guide becomes very small in the case of a small display panel.

### SUMMARY

Therefore, it is an aspect of the present invention to provide a three-dimensional display apparatus capable of reducing the size of the three-dimensional display apparatus and maintaining the thickness of a light guide module having a predetermined size or more.

Additional aspects of the invention will be set forth in part in the description which follows and, in part, will be obvious from the description, or may be learned by practice of the invention.

According to the present invention there is provided an apparatus and method as set forth in the appended claims. Other features of the invention will be apparent from the dependent claims, and the description which follows.

In accordance with one aspect of the present invention, a three-dimensional display apparatus includes a display panel, and a three-dimensional backlight configured to supply light to the display panel, wherein the three-dimensional backlight includes a light source configured to generate light, and a light guide module configured to guide the light generated by the light source to the display panel, and the light guide module includes a first light guide formed in a plate shape, the light source being disposed opposite to at least one of both side ends thereof, a second light guide formed in a plate shape and disposed in front of the first light guide, and emission patterns configured to emit light incident into the light guide module toward the display panel.

Each of the emission patterns may include a reflecting portion disposed in the rear of the emission pattern and configured to reflect light, and a scattering portion disposed in front of the emission pattern and configured to scatter light.

The emission patterns may be disposed between the first light guide and the second light guide.

A space between the emission patterns may be filled with a transparent material which transmits light.

A front surface of the first light guide may include grooves concavely provided corresponding to the emission patterns, and the emission patterns may be formed in the grooves.

A rear surface of the second light guide may include grooves concavely provided corresponding to the emission patterns, and the emission patterns may be formed in the grooves.

The reflecting portion may be formed with an air layer.

An emission plate formed in a plate shape, disposed between the first light guide and the second light guide, and provided with the emission pattern may be further included.

In accordance with another aspect of the present invention, a three-dimensional display apparatus includes a display panel, and a three-dimensional backlight configured to supply light to the display panel, wherein the three-dimensional backlight includes a pair of three-dimensional light sources disposed on both sides thereof in the rear of the display panel, and a light guide module disposed between the pair of the three-dimensional light sources, and the light guide module includes a first light guide formed in a plate shape, a second light guide disposed in front of the first light guide, and a scattering pattern configured to scatter light by reflecting light incident from the first light guide in an angle of reflection the same as an angle of incidence of the light, and reflecting light incident from the second light guide in an angle of reflection greater than an angle of incidence of the light.

The scattering pattern may be formed of a light reflective material and include a rear surface formed to be planar, and a front surface formed in a curved surface whose center protrudes convexly.

The scattering pattern may be formed of a light reflective material and include a scattering portion formed in a curved surface whose front surface protrudes convexly, and an air layer formed in the rear of the scattering portion.

In accordance with still another aspect of the present invention, a three-dimensional display apparatus includes a display panel, and a three-dimensional backlight configured to supply light to the display panel, wherein the three-dimensional backlight includes a light source configured to generate light, and a light guide module configured to guide light generated from the light source to the display panel, and the light guide module includes a light guide formed in a plate shape, the light source being disposed opposite to at least one of both side ends thereof, and an emission plate formed in a plate shape, and disposed in front of the light guide, and the emission plate includes an emission pattern which emits light incident into the light guide module toward the display panel.

The emission pattern may include emission portions concavely provided in a front surface of the emission plate, and reflecting portions provided on rear surfaces of the emission portions to reflect light.

An upper side of each of the emission portions may be formed to have a cross section of a trapezoidal shape facing a rear surface of the light guide.

The emission portions may extend in one direction in parallel.

The emission portions may be formed in prismoidal shapes.

The emission portions may be formed in square prismoidal shapes.

The emission portions may be formed in rectangular prismoidal shapes.

The emission portions may be formed in truncated cone shapes.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a schematic view of a three-dimensional display apparatus according to a first embodiment of the present invention;
FIG. 2 is a schematic view of a three-dimensional display apparatus according to a second embodiment of the present invention;
FIG. 3 is a schematic view of a three-dimensional display apparatus according to a third embodiment of the present invention;
FIG. 4 is a schematic view of a three-dimensional display apparatus according to a fourth embodiment of the present invention;
FIG. 5 is a schematic view of a three-dimensional display apparatus according to a fifth embodiment of the present invention;
FIG. 6 is a schematic view of a three-dimensional display apparatus according to a sixth embodiment of the present invention;
FIG. 7 is a schematic view of a three-dimensional display apparatus according to a seventh embodiment of the present invention;
FIG. 8 is a schematic view of a three-dimensional display apparatus according to an eighth embodiment of the present invention;
FIG. 9 is a perspective view illustrating an emission plate and an emission pattern in the three-dimensional display apparatus according to the eighth embodiment of the present invention;
FIG. 10 is a cross-sectional view illustrating an emission plate and an emission pattern in the three-dimensional display apparatus according to the eighth embodiment of the present invention;
FIGS. 11 and 12 are cross-sectional views illustrating a light path in the three-dimensional display apparatus according to the eighth embodiment of the present invention;
FIG. 13 is a perspective view illustrating an emission plate and an emission pattern in the three-dimensional display apparatus according to the ninth embodiment of the present invention;
FIG. 14 is a perspective view illustrating an emission plate and an emission pattern in the three-dimensional display apparatus according to the tenth embodiment of the present invention; and
FIG. 15 is a perspective view illustrating an emission plate and an emission pattern in the three-dimensional display apparatus according to the eleventh embodiment of the present invention.

### DETAILED DESCRIPTION

Reference will now be made in detail to the embodiments of the present invention, examples of which are illustrated in the accompanying drawings, wherein like reference numerals refer to like elements throughout.

Hereinafter, a three-dimensional display apparatus according to a first embodiment will be described with reference to accompanying drawings in detail.

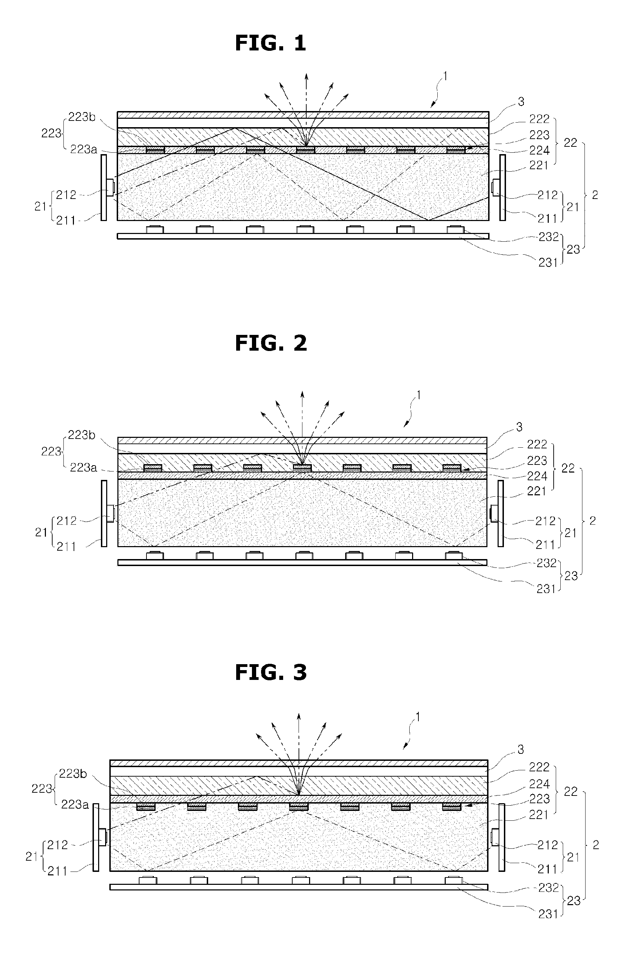

As shown in FIG. 1, the three-dimensional display apparatus according to the first embodiment includes a display panel 1 on which an image is displayed, backlight 2 which generates light to be supplied to the display panel 1, a spacer 3 which is disposed between the display panel 1 and a light guide module 22 to be described below and constantly maintains an interval between the display panel 1 and the light guide module 22.

The display panel 1 is formed by a liquid crystal panel having an approximately square plate shape.

The backlight 2 includes a pair of three-dimensional light sources 21 which are disposed on both sides thereof in the rear of the display panel 1 to emit light, the light guide module 22 which is disposed between the two three-dimensional light source 21 and guides light emitted from the two three-dimensional light sources 21 to the display panel 1 located in front thereof, and a two-dimensional light source 23 which is disposed in the rear thereof and emits light.

Each of the two three-dimensional light sources 21 is formed in a thin bar shape and includes substrates 211 disposed on both sides of the light guide module 22, and a plurality of light emitting diodes 212 disposed on the substrates 211 to face both side ends of the light guide module 22. Light emitted from the light emitting diodes 212 of the three-dimensional light source 21 is incident into the light guide module 22 through both side ends of the light guide module 22 and is emitted to the display panel 1 through a front surface of the light guide module 22.

The two-dimensional light source 23 is formed in a plate shape corresponding to the display panel 1 and includes a substrate 231 disposed in the rear of the light guide module 22, and a plurality of light emitting diodes 232 mounted on the substrate 231. Light generated from the two-dimensional light source 23 is emitted to the display panel 1 through the light guide module 22.

The light guide module 22 is formed in a square plate shape corresponding to the display panel 1 and includes a first light guide 221 in which the three-dimensional backlights 2 are disposed on both sides thereof, a second light guide 222 formed in a plate shape and disposed in front of the first light guide 221, and an emission pattern 223 which reflects light incident from the first light guide 221, and scatters light incident from the second light guide 222 so as to be emitted to the display panel 1 from the light guide module 22. Thus, the light incident into the light guide module 22 from the three-dimensional light source 21 is emitted through only a portion of the display panel 1 corresponding to a portion in which the emission pattern 223 is formed.

In the embodiment, the emission pattern 223 is formed in a space between the first light guide 221 and the second light guide 222, and a space, in which the emission pattern 223 is not formed in the space between the first light guide 221 and the second light guide 222, is filled with a light transmission material having a refractive index similar to that of the first light guide 221 and the second light guide 222 so that light passes through the light transmission material and is transferred to the second light guide 222 from the first light guide 221.

As described above, the emission pattern 223 reflects light incident from the first light guide 221 and scatters light incident from the second light guide 222. To this end, the emission pattern 223 includes a reflecting portion 223a, which is disposed in the rear thereof and formed of a light reflective material to reflect light, and a scattering portion 223b which is disposed in front of the reflecting portion 223a and formed of a light scattering material to scatter light.

In the embodiment, the first light guide 221 and the second light guide 222 are formed of polymethyl methacrylate (PMMA). The reflecting portion 223a is formed of aluminum and the scattering portion 223b is formed of a white ink in which barium sulfate is a major component. Further, a light transmission material 224 uses an index-matching oil in which a transparent acrylic adhesive or silicon is a major component. The light transmission material 224 formed in a gel form is preferable. In the descriptions of the above-described first light guide 221, second light guide 222, reflecting portion 223a, scattering portion 223b, and light transmission material 224 disclosed in one embodiment, various types of material may be used according to design.

In the embodiment, the formation of the light guide module 22 includes forming the reflecting portion 223a in which a light reflective material is stacked on the first light guide 221 using a photolithography method or the like, and then forming the scattering portion 223b in which a light scattering material is stacked on the reflecting portion 223a using a screenprinting method or the like. Subsequently, the second light guide 222 formed in a film shape is attached to the first light guide 221 through the light transmission material 224 having adhesive strength, and thus, the light guide module 22 is manufactured.

In the light guide module 22, light is incident to the emission pattern 223 from the first light guide 221 is reflected by the reflecting portion 223a and is incident again into the first light guide 221, and light incident to the emission pattern 223 from the second light guide 222 is scattered by the scattering portion 223b to be emitted to the display panel 1 through a front surface of the second light guide 222. Thus, the light guide module 22 guides light to only a portion of the display panel 1 corresponding to a location at which an emission pattern is formed.

When the light guide module 22 is formed as described above, since viewing distances between both eyes of a user and the display panel 1 are dependent on thicknesses of the second light guide 222 and the spacer 3 rather than the thickness of the first light guide 221, the desired thickness of the first light guide 221 can be freely designed by a designer. That is, even when the thickness of the second light guide 222 is formed in a thin shape, such as a film shape, in consideration of the viewing distance, the thickness of the first light guide 221 is freely designed by a designer so that the overall thickness of the light guide module 22 can be formed to be a predetermined size or more.

Accordingly, the design of the light guide module 22 applicable to a small three-dimensional display apparatus can be facilitated.

In the first embodiment of the present invention as described above, although the emission pattern 223 is disposed between the first light guide 221 and the second light guide 222, it is not limited thereto. As a second embodiment of the present invention shown in FIG. 2, it may also include forming concave grooves in the rear surface of the second light guide 222, which correspond to the emission pattern 223, and forming the emission pattern 223 in the grooves.

Further, as a third embodiment of the present invention shown in FIG. 3, concave grooves may be formed in a front surface of the first light guide 221, which correspond to the emission pattern 223, and the emission pattern 223 may be formed in the grooves.

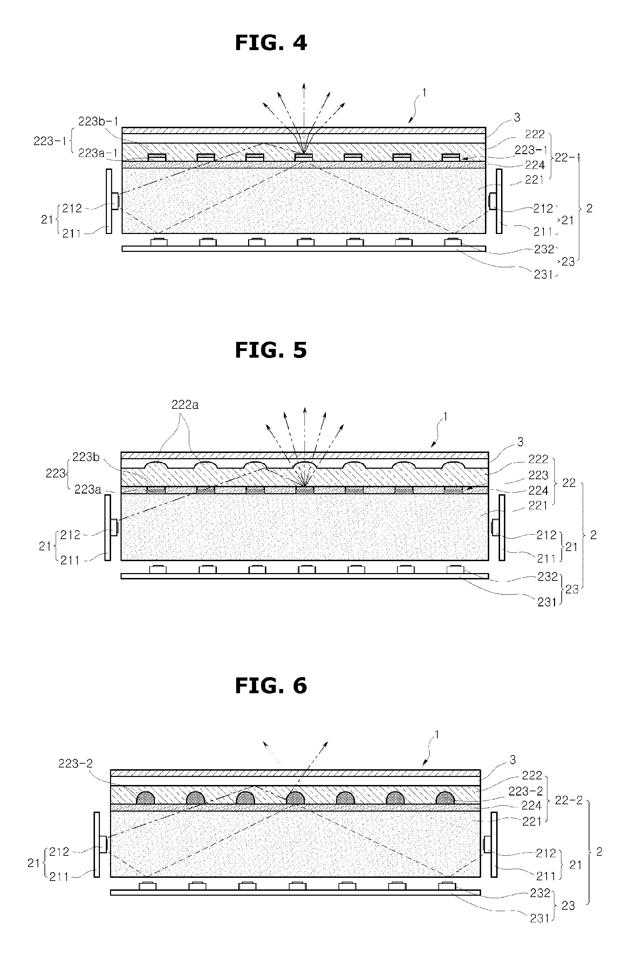

Further, when the grooves are formed in the second light guide 222 and the emission pattern 223 are formed in the grooves as described above, as a fourth embodiment of the present invention shown in FIG. 4, even when a reflecting portion 223a-1 of an emission pattern 223-1 is formed with an air layer, light can be reflected due to a refractive index difference between the first light guide 221 and the reflecting portion 223a-1 formed with the air layer.

Further, as a fifth embodiment of the present invention shown in FIG. 5, a convex lens 222a is formed in a front surface of the second light guide 222, which corresponds to a location of the emission pattern 223, and light scattered by the scattering portion 223b is gathered by the lens 222a, and thus, an amount of light to be transferred to the display panel 1 can be increased.

Further, in the above-described embodiments, although the emission pattern 223 includes the reflecting portion 223a and the scattering portion 223b, it is not limited thereto. As a sixth embodiment of the present invention shown in FIG. 6, an emission pattern 223-2 is formed of a light reflective material, the rear surface thereof is formed to be planar, and the middle of the front surface thereof is formed to be a convex curved surface. Thus, the function of the emission pattern 223-2 may simultaneously perform reflecting light incident from the first light guide 221 and scattering light incident from the second light guide 222.

That is, since the rear surface of the emission pattern 223-2 is formed to be planar, light incident to the rear surface of the emission pattern 223-2 from the first light guide 221 is reflected at an angle of reflection the same as an angle of incidence of the light, and light incident to the front surface of the emission pattern 223-2 from the second light guide 222 is reflected at an angle of reflection greater than an angle of incidence of the light. Thus, light reflected by the front surface of the emission pattern 223-2 may be emitted through the front surface of the light guide module 22. That is, light reflection and scattering may be simultaneously performed by the emission pattern 223-2 formed of a single material.

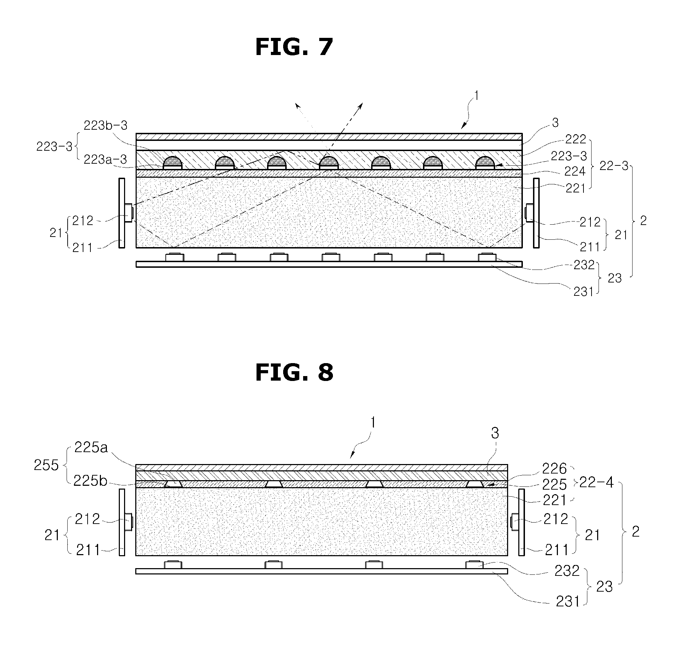

Further, as a seventh embodiment of the present invention shown in FIG. 7, an emission pattern 223-3 of the light guide module 22 is formed of a light reflective material, and may include a scattering portion 223b-3 in which the front surface thereof is formed to be a curved surface, and an air layer 223a-3 formed in the rear of the scattering portion 223b-3. The emission pattern 223-3 formed as described above reflects light incident from the first light guide 221 at an angle of reflection the same as an angle of incidence of the light, and reflects light incident from the second light guide 222 at an angle of reflection greater than an angle of incidence of the light through the air layer 223a-3.

A three-dimensional display apparatus shown in FIG. 8 is disclosed according to an eighth embodiment of the present invention.

In the embodiment, the three-dimensional display apparatus includes a display panel 1 and a light guide module 22-4 which is disposed in the rear of a light source 21 and the display panel 1 and guides light generated from the light source 21 to the display panel 1. A spacer 3 is disposed between the display panel 1 and the light guide module 22-4, and constantly maintains an interval between the display panel 1 and the light guide module 22-4.

The light guide module 22-4 includes a light guide 221 formed in a plate shape, and an emission plate 226 which is disposed in front of the light guide 221 and emits light incident into the light guide module 22-4 toward the display panel 1.

The light source 21 includes substrates 211 and light emitting diodes 212. The light emitting diodes 212 are disposed opposite to at least one of both side ends of the light guide 221 and light emitted from the light emitting diode 212 is incident to the light guide 221 through the side end of the light guide 221.

The emission plate 226 is formed in a plate shape corresponding to the light guide 221 and disposed in front of the light guide 221. An emission pattern 225 is provided on the front surface of the emission plate 226 to emit light from the emission plate 226 toward the display panel 1. Here, an air layer is formed between the emission plate 226 and the spacer 3.

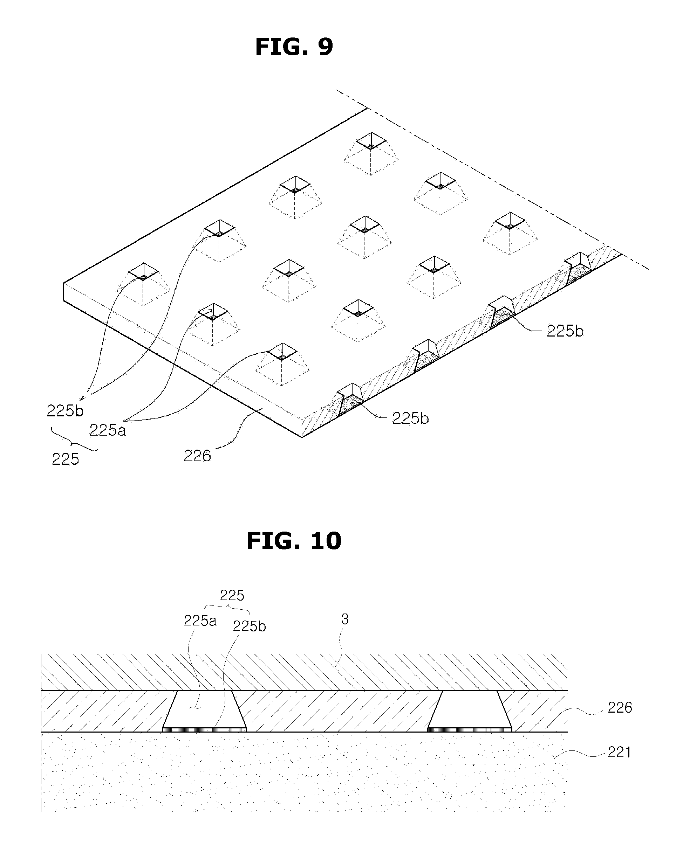

The emission pattern 225 includes emission portions 225a concavely provided on the front surface of the emission plate 226 provided toward the rear surface of the display panel 1, and reflecting portions 225b which are provided in inner sides of the rear surfaces of the emission portions 225a and reflect light, as shown in FIGS. 9 and 10. In the embodiment of the present invention, the emission portions 225a are provided in hole shapes, but it is one simple example. The emission portions 225a may be provided in groove shapes.

The emission portion 225a is formed so that a cross section thereof has a cross section of a trapezoidal shape. In the embodiment of the present invention, the emission portion 225a is concavely formed in a square prismoidal shape. An upper side of the emission portion 225a formed in an isosceles trapezoidal shape faces the rear surface of the display panel 1, and a reflecting portion 225b described above is formed on a side of the bottom of the emission portion 225a.

As formed above, most light reflected by the front surface of the emission plate 226 is directly emitted to the front of the emission portions 225a of the reflecting portions 225b or is reflected by the reflecting portions 225b and emitted to the front of the emission portions 225a.

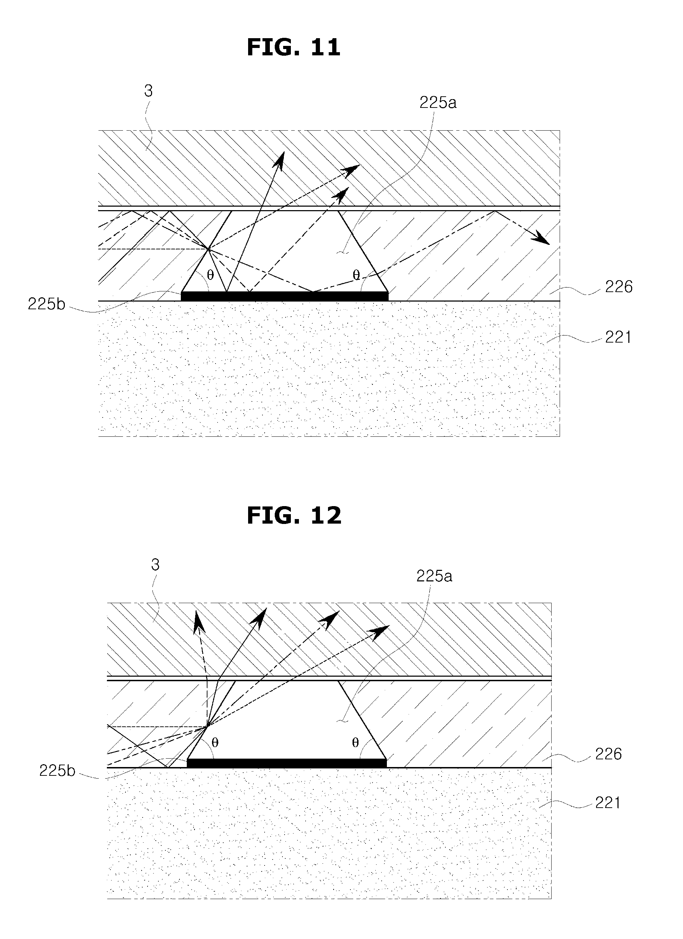

Further, light reflected by the rear surface of the emission plate 226 is also emitted into the emission portions 225a, and part of a light path is refracted by a difference of refractive indexes between media, and thus, the light is directly emitted to the front of the emission portions 225a as shown in FIG. 12. Further, light incident to the emission portions 225a in a total angle of reflection or less is totally reflected and incident to the second light guide 222 to be emitted to the display panel 1.

Therefore, most light incident to both side ends of the emission portion 225a is emitted to the front of the emission portion 225a.

In the embodiment of the present invention, the emission portions 225a are concavely formed in a square prismoidal shape having isosceles trapezoidal shapes in a vertical direction and a lateral direction, but it is not limited thereto. The emission portions may be formed to have cross sections of trapezoidal shapes and also formed to be various shapes.

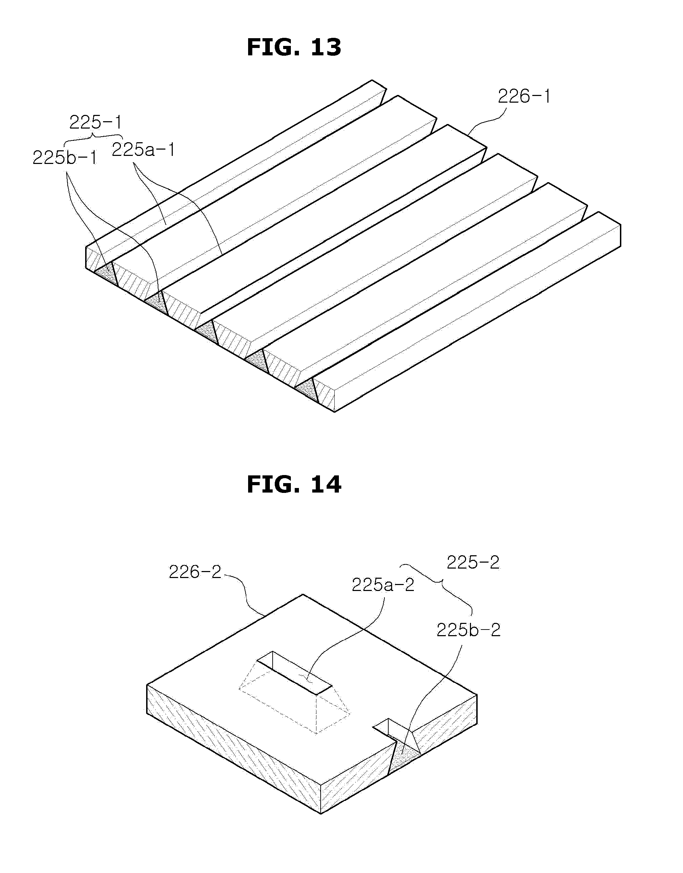

That is, as a ninth embodiment of the present invention shown in FIG. 13, emission portions 225a-1 are formed on an emission plate 226-1 to respectively have a cross section of a trapezoidal shape. The reflecting portions 225b-1 are formed long on sides at the bottom of the emission portions 225a-1 so as to extend in one direction in parallel. An emission pattern 225-1 may be formed using the emission portions 225a-1 and the reflecting portions 225b-1 described above.

Further, as a tenth embodiment of the present invention shown in FIG. 14, each emission portion 225a-2 is formed on an emission plate 226-2 in a rectangular prismoidal shape formed long in one direction, and each reflecting portion 225b-2 is formed on a side of the bottom of the emission plate 226-2. An emission pattern 225-2 may be formed using the emission portions 225a-2 and the reflecting portions 225b-2 described above. When the emission portions 225a-2 are formed in the rectangular prismoidal shape as described above, an amount of light emitted in a direction perpendicular to a longitudinal side of the emission portion 226a-2 is increased. Therefore, a viewing angle in a vertical direction and a viewing angle in a lateral direction can be set differently.

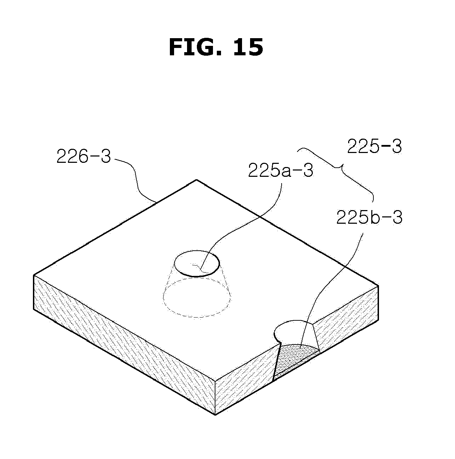

Further, as an eleventh embodiment of the present invention shown in FIG. 15, each emission portion 225a-3 is concavely formed on an emission plate 226-3 in a truncated-cone shape and each reflecting portion 225b-3 is formed on a side of the bottom of the emission plate 226-3. An emission pattern 225-3 may be formed using the emission portion 225a-3 and the reflecting portion 225b-3. When the emission portions 225a-3 are formed in the truncated cone shape, light is uniformly emitted to all directions in 360 degrees.

In the eighth to eleventh embodiments, the various shapes of the emission portions 225a, 225a-1, 225a-2, and 225a-3 are described, and all of the emission portions 225a, 225a-1, 225a-2, and 225a-3 can be applied to one emission plate. That is, one of the above-described emission portions 225a, 225a-1, 225a-2, and 225a-3 can be selectively applied according to a portion of the emission plate so as to be suitable for desired light characteristics.

In the embodiments, although the emission portions are formed to have a cross section of an isosceles trapezoidal shape in which both sides thereof are formed to be sloped at the same angle, they are not limited thereto. The emission portions may be formed to have a cross section of a trapezoidal shape in which both sides at the bottom thereof have different angles.

As is apparent from the above description, in a three-dimensional display apparatus according to one embodiment of the present invention, since a light guide module includes a first light guide, a second light guide, and an emission pattern, and light is passed through the second light guide by the emission pattern so as to emit to a display panel, viewing distances between both eyes of a user and the display panel are determined by the thickness of the second light guide. Accordingly, the desired thickness of the light guide module can be freely designed by a designer.

Although a few embodiments of the present invention have been shown and described, it would be appreciated by those skilled in the art that changes may be made in these embodiments without departing from the principles of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A three-dimensional (3D) display apparatus, comprising:
a display panel; and
a backlight configured to supply light to the display panel, the backlight comprising:
a plurality of light sources configured to generate light; and
a light guide module configured to guide the light generated by the plurality of light sources to the display panel, the light guide module comprising:
a first planar light guide, wherein at least a first one of the plurality of light sources is configured to emit light to a first end of the first planar light guide and at least a second one of the plurality of light sources is configured to emit light to a second end of the first planar light guide;
a second planar light guide disposed in front of the first light guide; and
a plurality of emission patterns configured to direct light incident into the light guide module toward the display panel.

2. The apparatus according to claim 1, wherein each of the plurality of emission patterns comprises:
a reflecting portion, configured to reflect light and disposed on a rear surface of the emission pattern; and
a scattering portion, configured to scatter light and disposed on a front surface of the emission pattern.

3. The apparatus according to claim 1, wherein the plurality of emission patterns are disposed between the first planar light guide and the second planar light guide.

4. The apparatus according to claim 3, wherein spaces among the plurality of emission patterns are filled with a transparent material.

5. The apparatus according to claim 1, wherein a front surface of the first light guide comprises a plurality of grooves formed therein, wherein the plurality of emission patterns are respectively formed in the plurality of grooves.

6. The apparatus according to claim 1, wherein a rear surface of the second light guide comprises a plurality of grooves formed therein, wherein the plurality of emission patterns are respectively formed in the plurality of grooves.

7. The apparatus according to claim 2, wherein the reflecting portion comprises an air layer.

8. A three-dimensional display apparatus comprising:
a display panel; and
a backlight configured to supply light to the display panel, the backlight comprising:
a plurality of light sources configured to generate light; and
a light guide module configured to guide light generated by the plurality of light sources to the display panel, the light guide module comprising:
a planar light guide, wherein at least a first one of the plurality of light sources is configured to emit light to a first end of the planar light guide and at least a second one of the plurality of light sources is configured to emit light to a second end of the planar light guide; and
a planar emission plate disposed in front of the light guide,
wherein the emission plate comprises an emission pattern which directs light from the light guide module toward the display panel.

9. The apparatus according to claim 8, wherein the emission pattern comprises a plurality of concave emission portions formed in a front surface of the emission plate, and a plurality of reflecting portions respectively disposed on rear surfaces of the plurality of emission portions.

10. The apparatus according to claim 9, wherein an upper side of each of the plurality of emission portions has a trapezoidal cross-section facing a rear surface of the light guide.

11. The apparatus according to claim 10, wherein the plurality of emission portions extend in a same direction in parallel.

12. The apparatus according to claim 10, wherein each of the plurality of emission portions has a prismoidal shape.

13. The apparatus according to claim 12, wherein each of the plurality of emission portions has a square prismoidal shape.

14. The apparatus according to claim 12, wherein each of the plurality of emission portions has a rectangular prismoidal shape.

15. The apparatus according to claim 10, wherein each of the plurality of emission portions has a truncated cone shape.
